**Europäisches Patentamt**

**European Patent Office**

**Office européen des brevets**

(19)

(11) Veröffentlichungsnummer: **0 293 377 B1**

# (12) EUROPÄISCHE PATENTSCHRIFT

(45) Veröffentlichungstag der Patentschrift:
02.05.91 Patentblatt 91/18

(51) Int. Cl.⁵: **F16D 25/12, F16D 65/853**

(21) Anmeldenummer: **87901049.4**

(22) Anmeldetag: **03.02.87**

(86) Internationale Anmeldenummer:
**PCT/EP87/00050**

(87) Internationale Veröffentlichungsnummer:
**WO 87/05084 27.08.87 Gazette 87/19**

(54) **ZWANGSKÜHLEINRICHTUNG FÜR REIBUNGSBREMSEN BZW. -KUPPLUNGEN.**

(30) Priorität: **14.02.86 PCT/EP86/00074**

(43) Veröffentlichungstag der Anmeldung:
**07.12.88 Patentblatt 88/49**

(45) Bekanntmachung des Hinweises auf die
Patenterteilung:
**02.05.91 Patentblatt 91/18**

(84) Benannte Vertragsstaaten:
**AT DE FR GB IT**

(56) Entgegenhaltungen:
**EP-A- 143 898**
**DE-A- 2 802 676**
**GB-A- 2 001 713**
**US-A- 4 321 990**
**US-A- 4 529 073**

(73) Patentinhaber: **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder: **SAILER, Hubert
Drosselweg 26
W-7778 Markdorf (DE)**
Erfinder: **DIETENBERGER, Josef
Kirchplatz
W-7961 Ebersbach (DE)**

(74) Vertreter: **Raue, Reimund
Zahnradfabrik Friedrichshafen AG Löwentaler
Strasse 100 Postfach 2520
W-7990 Friedrichshafen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung gemäß dem Oberbegriff des Anspruches 1.

Zwangskühleinrichtungen sind beispielsweise bekannt aus der DE-C-28 02 676. Dort wird ein von der Bremsdruckplatte axial über radiale Austritte aus in der Welle befindlichen Ölaustritten vorkragender Ringbund benutzt, um das in einen Ringraum unter dem Lamellenträger einströmende Kühlöl mengenmäßig zu steuern.

Für Anwendungsfälle, bei denen ein in die Welle eingelassener Ölkanal nicht in Frage kommt, ist eine derartige Bauweise ungeeignet. Auch ist hier die Abdichtungsqualität stark abhängig von den jeweiligen Toleranzen und eine vollständige Abdichtung in der Praxis kaum zu erreichen. Die Kühlölzuführung über rotiererde Bauteile (Welle) führte zudem zu drehzahlabhängigen Schwankungen der jeweiligen Ölmengen. Eine intensive Bespülung der Bremsdruckplatte (Kolben) war mit dieser Anordnung ebenfalls nicht sichergestellt. Auch änderte sich die Ölbeaufschlagung der einzelnen Lamellen-Spalte je nach Stellung des die Ölmenge regulierenden Ringbundes, weil es in Ermangelung strömungsgünstigerer Durchflußquerschnitte schon vor Erreichung der Öldurchtritte zu zufallsabhängigen Ölverspritzungen kommen mußte. Auch war die Ölabfuhr am Außenumfang und an Lamellen nicht gleichmäßig sichergestellt.

Auch bei weiteren Zwangskühlungseinrichtungen fanden sich keine den Betriebsverhältnissen völlig gerecht werdende Ausgestaltungen.

So stellte die von der EP-A-01 43 898 vorgeschlagene Verwendung großer Bremsscheiben mit mehreren großen Durchlässen zwischen Reibbelag und Innenlamellenträger nicht nur einen Grund für höhere Lamellenwerkstoffkosten, sondern auch einen Anlaß zu verstärkter Ölverspritzung und zu unregelmäßigem Ölfluß bzw. unregelmäßiger Reibflächenabnutzung dar.

Nach der US-A-45 29 073 sind zwar Öldurchlässe in den Lamellen dadurch vermieden, daß ein aus der DE-C-28 02 676 bekannter Ringraum unter einem von der Welle abgesetzten Innenlamellenträger als Ölsammelraum vor den Durchtritten in die Lamellenzwischenräume benutzt wird. Jedoch sind die dort vorgesehenen Kühlöl-Steuerventile in einer rotierenden Trommel und damit drehzahlabhängig gesteuert, also nicht funktionell mit dem Hub der Bremsdruckplatte verknüpft.

– Durch die US-A-43 21 990, von der im Oberbegriff des Anspruchs 1 ausgegangen wurde, wurde noch eine Zwangskühleinrichtung für Reibungsbremsen bzw. -kupplungen bekannt, bei welcher ein Bremsdruckkolben mit Hilfe gegen einen Federtopf abgestützter Hebel die Verstellung des Kühlöl-Steuerelementes übernimmt,

– indem Öleinlässe zu einem radial unter einem Reiblamellenpaket gelegenen und auf seiner einen Stirnseite offenen, inneren Ringkanal mit radialen Durchtritten durch einen Innenlamellenträger bei Ausgangsstellung des Bremsdruckkolbens abgedeckt sind,

– wobei jedoch die Einlässe in Belastungsstellungen je nach Bremshub mehr oder weniger weit geöffnet sind,

– wozu als Kühlölsteuerelement ein zur Hauptachse des Reiblamellenpaketes achsparalleles Rohrstück dient,

– welches in Hubrichtung mitnehmbar ist,

– und wobei das Rohrstück einen Ölzutrittskanal in Ausgangsstellung der Bremsdruckplatte absperrt,

– wobei der Ölzutrittskanal in einer drehfesten Gehäusestirnwand angeordnet und mit einem dieselbe durchdringenden Kühlölanschluß verbunden ist.

Die betreffende Ausgestaltung ergibt indessen noch keine optimale Kühlregelung, weil damit der Einlaß durch den Kolbenhub direkt erfolgt, also beginnt, ehe die Reibung einsetzt, und erst endet, nachdem die Reibung längst beendet, nämlich der Kolben in seine Endlage zurückgekehrt ist. Zudem bleiden infolge baulicher Trennung von Kolben und Bremsdruckplatte mittels Hebeln Fertigungs- und Montageprobleme. Leckströme werden nur bedingt ausgeschlossen und Schleppmomente somit nicht sicher vermieden.

Die Aufgabe der Erfindung wird hiervon ausgehend darin gesehen, für diesen bekannten Stand der Technik eine präzisere und wirkungsvollere, aber dennoch kostengünstig einfache Zwangskühleinrichtung zu schaffen, welche sowohl drehzahlunabhängig arbeitet als auch während Nichtbetätigung der Bremse eine sichere Absperrung jeglicher weiterer Kühlölzufuhr ergibt und mit Beginn der Beanspruchung der Bremse eine gleichmäßige, intensive Durchflutung der Lamellenspalte und sofort nach Abheben der Bremsdruckplatte eine rasche Entfernung des erwärmten Öles aus dem Bremsenbereich sicherstellt.

Die Lösung wird mit den Merkmalen des Anspruches 1 insbesondere dadurch erreicht, daß mittels einer kolbenähnlichen Führung vieler am Umfang der Bremsdruckplatte einzeln abgefedert angeordneter Rohrstücke in den Axialbohrungen in der Gehäusestirnwand und ventilsitzartiger Mündungsverschlüsse ohne Betätigungshebel usw. sichergestellt wird, daß erst bei einem vorgebbaren Anfangs-Bremshub der Bremsdruckplatte ein Kühlöldurchfluß stattfinden kann. Durch Einsatz der Lamellenzahl und der dem Lamellenumfang angepaßten Anzahl von Rohrstücken, oder aber durch Veränderung von deren Innendurchmesser, läßt sich die Kühlölmenge für die unterschiedlichsten Bremsleistungen präzise dosieren und verteilen.

Infolge der Eindichtung der Rohrstücke in Stirnbohrungen des Gehäuses kann unter Wahrung der Axialverschieblichkeit der Rohrstücke auch noch die dem Anschlag zugewandte Außenkontur der Rohrstücke für eine progressive Querschnittsveränderung der Zuströmöffnungen, entsprechend konisch oder eingekehlt, geformt sein. Bei kolbenförmigem Ansatz kann auch erreicht werden, daß der Kühlöldruck die Öffnungsbewegung entgegen den die Rohrstücke gegen die Gehäusestirnwand andrückenden Federn nach Einleitung des Bremshubes noch zusätzlich unterstützt.

Dank der von der Bremsdruckplatte bzw. von einem an dieser angeformten Kragen nur in Belastungsrichtung mitnehmbaren Rohrstücke können diese infolge der federnden Abstützung in der Bremsdruckplatte sowohl Fertigungs- als auch Hubtoleranzen selbsttätig ausgleichen, ohne daß die Abdichtung in der Ausgangsstellung beeinträchtigt wird. Damit werden Schleppmomente im Reiblamellenpaket infolge unbeabsichtigter Leckströme ausgeschlossen.

– Mit einer strömungsgünstigen Ausgestaltung des inneren Ringkanals gemäß Anspruch 2 und einer Ölfangkante oberhalb der bremsenseitigen Mündung der Rohrstücke staut sich beim Bremsen ein am ganzen Umfang und auf ganzer Länge des Lamellenträgers ein gleichmäßig dicker Ölring unter Mithilfe von Zentrifugalkräften an, der dann eine gleichmäßige Beaufschlagung der radialen Öldurchtritte im Lamellenträger ergibt, ohne daß die eigentliche Ölmenge von Drehzahländerungen abhängig wäre, wie dies mit fliehkraftabhängigen Steuerventilen der Fall ist.

– Mit einem reichlich bemessenen Ringspaltkanal zur Ölableitung aus der Außenlamellenträgerverzahnung entlang einer die eigentliche Bremsfläche außen umfassenden weiteren Außenstirnfläche der Bremsdruckplatte gemäß Anspruch 3 wird neben einer raschen Ableitung des aus dem Bremsbereich abfließenden Öles auch noch eine intensive Kühlwirkung an der Bremsdruckplatte selbst erreicht.

– Mit einer Ölzu- und -abführung durch den Gehäusemantel nach Anspruch 4 wird eine besonders für den Einbau in Getriebegehäuse montagegünstige Anordnung erreicht, ohne daß die Welle durch innere Ölkanäle geschwächt werden müßte.

Einzelheiten der Erfindung werden anhand eines Ausführungsbeispieles gemäß der Zeichnung beschrieben.

Die einzige Zeichnung zeigt eine Zwangskühleinrichtung für Reibungsbremsen bzw. -kupplungen, wie sie innerhalb eines Schaltgetriebes als praktisch "verschleißfreie" und schleppmomentfreie Bremse eingesetzt werden kann. Sinngemäße Anordnungen sind auch denkbar für Bremsen in Radgetrieben, Kupplungen usw.

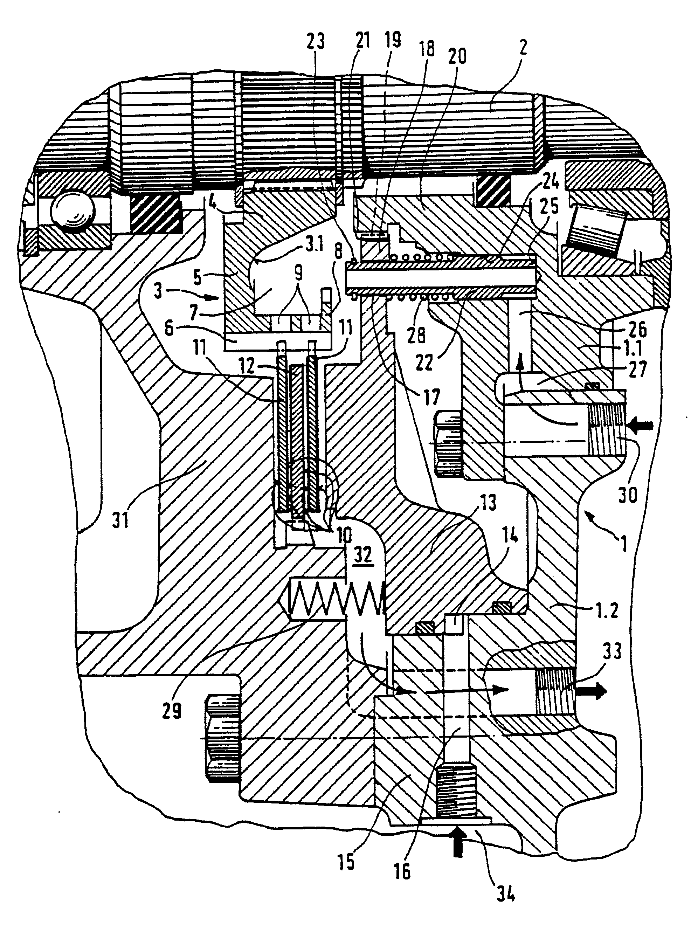

In Fig. 1 ist eine radiale Gehäusestirnwand 1 durchdrungen von einer Welle 2, auf welcher ein Lamellenträger 3 drehfest gehalten ist. Dieser besteht aus einer Muffe 4, welche auf der der Gehäusewand 1 abgewandten Seite einen Radialsteg 5 aufweist. Dieser wiederum trägt in einem gewissen Radialabstand vom Außendurchmesser der Muffe 4 einen Innenlamellen-Verzahnungsring 6. Der dadurch gebildete zur Gehäusestirnwand 1 offene Ringkanal 7 innerhalb des Lamellenträgers 3 wird in dieser bevorzugten Ausführung an seinem Außenumfang teilweise jedoch wieder axial verschlossen durch eine radiale Ölfangkante 8 an der der Gehäusewand 1 zugewandten Stirnseite des Innenlamellen-Verzahnungsringes 6. Dieser ist auf seinem Umfang mit zahlreichen radialen Öldurchtritten 9 zu den Reibflächen 10 versehen, welche bevorzugt mit Radialnuten ansich bekannter Art versehen sind.

Axial zwischen dem von den mit den Reibflächen 10 versehenen Innen- und Außenlamellen 11, 12 gebildeten Reiblamellenpaket 6, 10, 11, 12 und der Gehäusestirnwand 1 ist die in die letztere axial eingelassene Bremsdruckplatte 13 axial beweglich geführt. Wenn der an ihrem Außenumfang eingearbeitete Stufen-Ringzylinder 14 über die radial durch den Gehäusemantel 15 herangeführte Steuerleitung (Steuerdruckanschluß) 16 unter Druck gesetzt wird, werden die Innen- und Außenlamellen 11, 12 von der Bremsdruckplatte je nach Betätigungsdruck mehr oder minder stark zusammengepreßt.

Der Innenumfang der ringförmigen Bremsdruckplatte 13 weist einen inneren Kragen 18 auf, der von Axialbohrungen 17 durchsetzt ist. Die Bremsdruckplatte 13 ist dadurch über den Innendurchmesser des Innenlamellen-Verzahnungsringes 6 hinaus zur Welle 2 hin verbreitert. Im Beispiel ist der Kragen 18 mit einer Innenverzahnung 19 versehen, welche in einem axial vorkragenden Ringbund 20 mit Außenverzahnung 21 knapp über der Welle 2 axial verschieblich geführt ist. In die am Umfang mit gleichem Radius verteilten Axialbohrungen 17 des Kragens 18 sind kurze Rohrstücke 22 mit einer Mündung vor dem inneren Ringkanal 7 des Lamellenträgers 3 durch einen Sperrring 23 so festgelegt, daß sie im Belastungsfalle des Stufenzylinders 14 durch die Bremsdruckplatte 13 von der Gehäusestirnwand 1 in den Axialbohrungen 24 um den jeweiligen Bremshub abhebbar sind.

Dabei entsteht rund um die dem Kragen 18 gegenüberliegende Mündung des Rohrstückes 22 innerhalb der Axialbohrungen 24 ein Ringspalt vor einer durch den Boden der Axialbohrung 24 gebildeten Dichtfläche 25, durch welchen dann Kühlöl aus einzelnen Ölzutriffskanälen (Ölkanäle) 26 zuströmen kann. diese Ölkanäle 26 werden aus einem in der Gehäusestirnwand 1 eingearbeiteten Ringraum 27 gleichmäßig gespeist. Zwischen dem Kragen 18 der Bremsdruckplatte 13 und der Gehäusestirnwand 1 sind die Rohrstücke 22 umgebende Druckfedern 28 vorgesehen, welche auch bei Nachlassen der aus dem Stufenringzylinder 14 herrührenden Belastung der Bremsdruckplatte 13 und der dann einsetzenden Rückstellung derselben in ihre mit Anlage an der Gehäusestirnwand 1 verbundene Ausgangstellung die Fohrstücke 22 im Kragen 18 federnd so abstützen. Dadurch ist in Ausgangsstellung stets ein dichter Abschluß auf der Dichtfläche 25 sichergestellt, gleichgültig, ob und wieviel die Abnutzung der Reiblamellen oder andere Fertigungstoleranzen bzw. Erwärmungseinschlüsse zu einer Veränderung des Bremshubes geführt haben. Die Rückstellung der Bremsdruckplatte 13 erfolgt dabei durch eigene, zwischen ihr und der Gehäusestirnwand 1 axial abgestützte Druckfedern 29, die sich auf einem Kreisumfang gegen die Bremsdruckplatte 13 außerhalb des Reiblamellenpaketes 6, 10, 11, 12 anlehnen.

Zur Fertigungs- und Montageerleichterung kann die Gehäusestirnwand 1 als Flanschverbindung eines wellennäheren Innenflansches 1.1 und eines außen in den Gehäusemantel 15 übergehenden Außenflansches 1.2 gestaltet werden, in deren Stoßbereich der Ringraum 27 für die Ölversorgung der Rohrstücke 22 als Radialnut eingearbeitet ist. Die Zufuhr des Kühlöles dorthin kann dann durch einen einzelnen axialen Kühlölanschluß 30 in der Gehäusestirnwand 1 erfolgen. Damit das aus dem Reiblamellenpaket 6, 10, 11, 12 abgeschleuderte Kühlöl auch bei längeren Bremsvorgängen raschmöglichst, ohne Rückstau, aus dem Lamellenbereich abfließen kann, ist zwischen Bremsdruckplatte 13 und einer ihr gegenüber liegenden gehäusefesten Bremsdruckplatte 31 ein breiter Ringspaltkanal 32 vorgesehen, der zu Kühlölablässen 33 in der Gehäusestirnwand 1 führt.

Die Beaufschlagung des Stufenringzylinders 14 erfolgt über einen vom Kühlöanschluß 30 völlig getrennten Steuerdruckanschluß 34, der im Beispiel im zylindrischen Mantelteil 15 angeordnet ist.

## Ansprüche

1. Zwangskühleinrichtung für Reibungsbremsen bzw. -kupplungen
   – mit durch eine Bremsdruckplatte (13) verstellbarem Kühlösteuerelement,
   – welches mindestens einen Ölzutriffskanal (26) zu einem radial innerhalb einem Reiblamellenpaket (6, 10, 11, 12) gelegenen und auf seiner einen Stirnseite offenen, inneren Ringkanal (7) mit radialen Durchtritten (9) durch einen Innenlamellenträger (3) bei Ausgangsstellung der Bremsdruckplatte (13) abgedeckt hält,
   – jedoch in Belastungsstellungen je nach Bremshub mehr oder weniger weit öffnet,
   – wozu als Kühlösteuerelement ein zur Hauptachse des Reiblamellenpaketes achsparalleles Rohrstück ((22) dient,
   – welches von der Bremsdruckplatte (13) in Hubrichtung mitnehmbar ist,
   – und wobei das Rohrstück (22) den Ölzutrittskanal (26 in Ausgangsstellung der Bremsdruckplatte (13) absperrt,
   – wobei der Ölzutrittskanal (26) in einer drehfesten Gehäusestirnwand (1) angeordnet und mit einem dieselbe durchdringenden Kühlöanschluß (30) verbunden ist, dadurch **gekennzeichnet,**
   – daß der Ölzutrittskanal (26) radial angeordnet ist und mehrere einzelne Rohrstücke (22) am Umfang eines Kragens (18) der Bremsdruckplatte (13) vorgesehen sind,
   – welche in Axialbohrungen (24) in der Gehäusestirnwand (1) axial verschieblich und dichtend geführt und durch Druckfedern (28) gegen radiale Dichtflächen (25) gegenüber der Bremsdruckplatte (13) gestützt sind,
   – wobei die Rohrstücke (22) auf die Dichtflächen (25) gedrückt werden, bevor die Bremsdruckplatte (13) selbst ihre Ausgangsstellung beim Öffnen erreicht hat.

2. Einrichtung nach Anspruch 1, dadurch **gekennzeichnet,** daß der den inneren Ringkanal (7) unter dem Reiblamellenpaket (6, 10, 11, 12) axial begrenzende Radialsteg (5) des Lamellenträgers (3) mit strömungsgünstig ausgerundeter Abweiskontur zur Ölstrumumlenkung in radiale Richtung spritzkantenfrei ausgestaltet ist und eine radiale Ölfangkante (8) aus seiner der Bremsdruckplatte (13) zugewandten Stirnseite des Innenlamellen-Verzahnungsringes (6) aufweist.

3. Einrichtung nach einem der vorstehenden Ansprüche, dadurch **gekennzeichnet,** daß das Reiblamellenpaket (6, 10, 11, 12) von einem äußeren Ringspaltkanal (32) umgeben ist, welcher entlang der um die Breite von Rückstellfedern (29) vergrößerten Bremsdruckplatte (13) vergrößerten lamellenseitigen Oberfläche der Bremsdruckplatte (13) zu mindesten einem Kühlölablaß (33) führt.

4. Einrichtung nach einem der vorstehenden Ansprüche, dadurch **gekennzeichnet,** daß zwischen Außenumfang der Bremdruckplatte (13) und einem Gehäusemantel (15) ein Stufenringzylinder (14) vorgesehen ist, zu dem im Gehäusemantel (15) angebrachte radiale Steuerdruckanschlüsse (16) führen, die axial gekreuzt werden durch die Kühlölablässe (33) in der Gehäusestirnwand (1).

## Claims

1. A forced cooling device for friction brakes or clutches, comprising a cooling oil control element which is adjustable by means of a brake pressure plate (13) and which in the starting position of the brake pressure plate (13) covers at least one oil inlet duct (26) to an inner annular duct (7), which is arranged radially inside a multiple friction disc (6, 10, 11, 12), is open at one end face and comprises radial apertures (9) through an inner disc support (3), but in loading positions opens said oil inlet duct (26) to a greater or lesser degree as a function of the braking stroke, a tubular element (22) which is axially parallel to the main axis of the multiple friction disc being used as the cooling oil control element, the tubular element (22) being carried along by the brake pressure plate (13) in the direction of the stroke and in the starting position of the brake pressure plate (13) blocking the oil inlet duct (26), the oil inlet duct (26) being arranged in a rotationally rigid housing end wall (1) and being connected with a cooling oil socket (30) penetrating said housing end wall (1), characterised in that the oil inlet duct (26) is arranged radially and a plurality of individual tubular elements (22) are provided on the periphery of a collar (18) of the brake pressure plate (13) and are axially displaceable and guided in a sealing-tight manner within axial bores (24) in the housing end wall (1) and are supported by means of pressure springs (28) against radial sealing surfaces (25) relative to the brake pressure plate (13), the tubular elements (22) being pressed onto the sealing surfaces (25) before the brake pressure plate (13) per se has reached its starting position during opening.

2. A device according to claim 1, characterised in that the radial web (5) of the multiple disc support (3) axially defining the inner annular duct (7) beneath the multiple friction disc (6, 10, 11, 12) is designed so as to be free of spraying edges with a flowenhancing rounded deflecting contour for deflecting the oil flow in the radial direction and comprises a radial oil collecting edge (8) at the end face of the inner disc-toothed ring (6) facing the brake pressure plate (13).

3. A device according to one of the preceding claims, characterised in that the multiple friction disc (6, 10, 11, 12) is surrounded by an outer annular gap duct (32), which extends along the multiple disc-side surface of the brake pressure plate (13) enlarged by the width of restoring springs to at least one cooling oil outlet (33).

4. A device according to one of the preceding claims, characterised in that a stepped ring cylinder (14) is provided between the outer circumference of the brake pressure plate (13) and a housing casing (15), to which stepped ring cylinder (14) lead radial control pressure connections (16) disposed in the housing casing (15), which are crossed axially by the cooling oil outlets (33) in the housing end wall (1).

## Revendications

1. Dispositif de refroidissement forcé de freins ou d'embrayages à friction,
   – comportant un élément de commande d'huile de refroidissement qui est déplacé par un plateau de poussée de frein (13)
   – et qui, dans la position de repos de ce plateau (13), maintient obturé au moins un canal (26) d'amenée d'huile à un canal annulaire intérieur (7), situé radialement à l'intérieur par rapport à un paquet de disques de friction (6, 10, 11, 12) et ouvert sur l'un de ses côtés frontaux, et à des passages radiaux (9) à travers un porte-disques intérieur (3),
   – mais qui, dans des positions de travail, ouvre le canal d'amenée plus ou moins largement selon la course du frein,
   – ledit élément de commande d'huile de refroidissement étant formé par une pièce tubulaire (22) à axe parallèle à l'axe principal du paquet de disques,
   – cette pièce étant entraînée par le plateau de poussée (13) dans la direction de la course,
   – cette pièce tubulaire (22) obturant le canal d'amenée d'huile (26) dans la position de repos du plateau de poussée (13),
   – le canal d'amenée d'huile (26) étant disposé dans une paroi frontale non rotative (1) d'un carter et relié à un raccord d'huile de refroidissement (30) traversant cette paroi, **caractérisé :**
   – en ce que le canal d'amenée d'huile (26) est disposé radialement et que plusieurs desdites pièces tubulaires (22) sont prévues sur le pourtour d'un collet (18) du plateau de poussée (13),
   – ces pièces étant montées de manière coulissante axialement et étanche dans des alésages axiaux (24) de ladite paroi frontale (1) du carter et étant appuyées contre des surfaces radiales d'étanchéité (25) au moyen de ressorts de compression (28) prenant appui sur ledit plateau (13),
   – de sorte que les pièces tubulaires (22) sont pressées sur lesdites surfaces d'étanchéité (25) avant que ledit plateau (13) lui-même ait atteint sa position de repos lors de l'ouverture.

2. Dispositif selon la revendication 1, **caractérisé** en ce que le flasque radial (5) du porte-disques (3), délimitant axialement le canal annulaire intérieur (7) sous le paquet de disques (6, 10, 11, 12), a une forme dépourvue d'arêtes saillantes, présentant un profil de guidage hydrodynamique arrondi pour dévier l'huile en direction radiale, et comporte un rebord radial (8) de retenue d'huile sur l'extérieur du bord frontal, du côté du plateau de poussée (13), de son anneau denté (6) portant les disques intérieurs.

3. Dispositif selon l'une des revendications précédentes, **caractérisé** en ce que le paquet de disques (6, 10, 11, 12) est entouré d'un canal annulaire extérieur en forme de fente (32) qui conduit à au moins une sortie (33) d'huile de refroidissement, en passant le long de la surface du plateau (13) située du côté des disques, cette surface étant agrandie dans une mesure correspondant à la largeur de ressorts de rappel (29).

4. Dispositif selon l'une des revendications précédentes, **caractérisé** en ce que, entre le pourtour extérieur du plateau de poussée (13) et une partie périphérique (15) du carter, il est prévu un cylindre annulaire à gradins (14) auquel conduisent des raccordements hydrauliques de commande (16) qui sont ménagés radialement dans ladite partie périphérique (15) et qui sont croisés axialement par les sorties (33) d'huile de refroidissement dans la paroi frontale (1) du carter.